# EUROPÄISCHE PATENTANMELDUNG

(11) **EP 0 812 895 A2**
(43) Veröffentlichungstag der Anmeldung: **17.12.1997**
(21) Anmeldenummer: 97109315.8
(22) Anmeldetag: 09.06.1997
(51) Int. Cl.: C09K 5/04

(54) **Steckerfertiges Kühlmöbel und Verfahren zum Betreiben eines steckerfertigen Kühlmöbels**

(30) Priorität: 11.06.1996 DE 19623311
(71) Anmelder: Linde Aktiengesellschaft, 65189 Wiesbaden (DE)
(72) Erfinder: Rinne, Frank, Dr.-Ing., 55286 Wörrstadt (DE); Haaf, Siegfried, Dipl.-Ing., 50999 Köln (DE); Riedel, Jürgen, Dipl.-Ing., 10715 Berlin (DE)

(57) **Zusammenfassung**

Steckerfertiges Kühlmöbel und Verfahren zum Betreiben eines steckerfertigen Kühlmöbels zur Lagerung und/oder Präsentation von Waren mit wenigstens einem gekühlten Warenraum, wobei das steckerfertige Kühlmöbel einen hermetisch abgeschlossenen Kältemittelkreislauf aufweist und als Kältemittel für diesen Kältemittelkreislauf Propan oder Propen oder ein Gemisch aus Propan und Propen verwendet wird.

Hierbei kann das Kältemittel einen Propananteil von 1 bis 99 Vol.-% und/oder einen Propenanteil von 99 bis 1 Vol.-% aufweisen.

Die in dem hermetisch abgeschlossenen Kältemittelkreislauf zirkulierende Kältemittelmenge beträgt weniger als 200 g, insbesondere weniger als 150 g.

## Beschreibung

Die Erfindung betrifft ein steckerfertiges Kühlmöbel zur Lagerung und/oder Präsentation von Waren mit wenigstens einem gekühlten Warenraum. Die Erfindung betrifft ferner ein Verfahren zum Betreiben eines steckerfertigen Kühlmöbels zur Lagerung und/oder Präsentation von Waren mit wenigstens einem gekühlten Warenraum und einem hermetisch abgeschlossenen Kältemittelkreislauf

Unter dem Begriff "steckerfertiges Kühlmöbel" ist ein Kühlmöbel zu verstehen, das sämtlich Vorrichtungen zur Erzeugung der Kühlung für den zu kühlenden Warenraum, also wenigstens einen Verdichter, einen Verdampfer sowie eine entsprechende Verrohrung, enthält. Hierbei zirkuliert ein Kältemittel zwischen Verdichter und Verdampfer und gibt bei seiner Verdampfung die Kälteleistung an den Warenraum über einen Kühl- bzw. Kaltluftstrom an die in dem Warenraum gelagerten und präsentierten Waren ab.

Derartige steckertertige Kühlmöbel werden insbesondere in kleineren Geschäften oder in Tankstellen verwendet, da der Einsatz sog. Verbund-Kühlmöbel - dies sind Kühlmöbel, bei denen die Kältebereitstellung über eine zentrale Verbundkälteanlage erfolgt - nur im Falle der Aufstellung einer Vielzahl von Kühlmöbeln Sinn macht. Auch besitzen steckerfertige Kühlmöbel im Gegensatz zu den Verbund-Kühlmöbel eine größere Flexibilität bzgl. der Aufstellung- und Variationsmöglichkeiten.

Der Begriff "Kühlmöbel" umfaßt gekühlte Verkaufstheken, gekühlte Selbstbedienungstheken, gekühlte Truhen bzw. Inseln, gekühlte Regale, etc. sowie Kombinationen aus den vorgenannten Kühlmöbeltypen, wie z. B. "Regalaufsatz auf Truhe".

Der Begriff "Lagerung und/oder Präsentation" umfasse neben den herkömmlichen, o.g. steckerfertigen Kühlmöbeltypen auch diejenigen steckerfertigen Kühlmöbeltypen, die z. B. ausschließlich der Lagerung von zu kühlenden Produkten bzw. Gegenständen dienen und aus diesem Grunde nicht im eigentlichen Verkaufsraum sondern in einem Lagerraum o.ä. aufgestellt sind.

Als alternative Kältemittel für derartige steckerfertige Kühlmöbel werden zur Zeit als Ersatzstoffe für die bislang verwendeten Fluorchlorkohlenwasserstoffe Fluorkohlenwasserstoffe eingesetzt, die jedoch immer noch ein sog. Treibhauspotential besitzen. Neuere Fluorkohlenwasserstoff-Kältemittel sind z. B. unter den Bezeichnungen R 134a und R 404A bekannt.

Aufgabe der vorliegenden Erfindung ist es, ein steckenfertiges Kühlmöbel anzugeben, das aufgrund des in ihm verwendeten Kältemittels als ökologisch vollkommen unbedenklich einzustufen ist. Desweiteren soll es einen gegenüber herkömmlichen steckerfertigen Kühlmöbeln geringeren Energiebedarf aufweisen.

Diese Aufgabe wird erfindungsgemäß dadurch gelöst, daß das steckerfertige Kühlmöbel einen hermetisch abgeschlossenen Kältemittelkreislauf aufweist und als Kältemittel für diesen Kältemittelkreislauf Propan oder Propen oder ein Gemisch aus Propan und Propen verwendet wird.

Das erfindungsgemäße Verfahren zum Betreiben eines steckerfertigen Kühlmöbels zur Lagerung und/oder Präsentation von Waren zeichnet sich dadurch aus, daß als Kältemittel für diesen Kältemittelkreislauf Propan oder Propen oder ein Gemisch aus Propan und Propen verwendet wird.

Propan, Propen und damit auch Gemische aus Propan und Propen weisen hervorragende Kältemitteleigenschaften auf. Sie sind sowohl im sog. Normalkühlbereich von ca. -5 bis -15 °C, als auch im sog. Tiefkühlbereich bis -40 °C einsetzbar.

Im Gegensatz zu den bekannten Kältemittel auf der Basis von Fluorchlorkohlenwasserstoffen schädigen sie jedoch weder die Ozonschicht, noch tragen sie direkt zum Treibhauseffekt bei. Aufgrund der Tatsache, daß sie gegenüber den bekannten F(C)KW-Kältemitteln eine höhere Energieeffizienz aufweisen, läßt sich der Stromverbrauch pro Kühlmöbel verringern, wodurch der Schadstoffausstoß, insbesondere der für den Treibhauseffekt verantwortliche Kohlendioxidausstoß im Kraftwerk verringert wird. Desweiteren sind Propan und Propen toxisch unbedenklich, sodaß auch eine mögliche Leckage innerhalb eines Kühlmöbels ohne gesundheitliche Folgen für den Verbraucher, der sich mit Lebensmitteln aus diesem Kühlmöbel versorgt, bleibt.

Propan, Propen oder Gemische aus Propan und Propen sind jedoch sicherheitstechnisch bedenklich, da sie zum einen leicht brennbar sind und zum anderen bei entsprechender Konzentration in der Luft mit dieser ein explosives Gemisch bilden. Es ist daher notwendig, daß der Propan, Propen oder Gemische aus Propan und Propen enthaltende Kältemittelkreislauf hermetisch abgeschlossen ist.

Eine Ausgestaltung des erfindungsgemäßen steckerfertigen Kühlmöbels bzw. des erfindungsgemäßen Verfahrens zum Betreiben eines steckerfertigen Kühlmöbels zur Lagerung und/oder Präsentation von Waren zeichnet sich dadurch aus, daß das Kältemittel einen Propananteil von 1 bis 99 Vol.-% und/oder einen Propenanteil von 99 bis 1 Vol.-% aufweist.

Das erfindungsgemäße steckerfertige Kühlmöbel bzw. das erfindungsgemäße Verfahren zum Betreiben eines steckerfertigen Kühlmöbels zur Lagerung und/oder Präsentation von Waren weiterbildend empfiehlt es sich, daß die in dem hermetisch abgeschlossenen Kältemittelkreislauf zirkulierende Kältemittelmenge weniger als 200 g, insbesondere weniger als 150 g beträgt.

Aufgrund der bereits erwähnten höheren Energieeffizienz des Kältemittels Propan, Propen oder Propan/Propen-Gemisch gegenüber den bisher verwendeten Kältemitteln, kann die Füllmenge, also die Menge an Kältemittel, die in dem steckerfertigen Kühlmöbel zirkuliert, minimiert werden. Diese Tatsache, in Verbindung mit der Anforderung "hermetisch abgeschlossener Kältemittelkreislauf", erlauben es, daß das steckerfertige Kühlmöbel auf eine Sicherheitstechnik, die der Überwachung des Kältemittelkreislaufs dient, verzichten kann.

Mit dem erfindungsgemäßen steckerfertigen Kühlmöbel zur Lagerung und/oder Präsentation von Waren mit wenigstens einem gekühlten Warenraum sowie mit dem erfindungsgemäße Verfahren zum Betreiben eines derartigen Kühlmöbels wird zum ersten Mal ein steckerfertiges Kühlmöbel bzw. Verfahren zum Betreiben eines steckerfertigen Kühlmöbels realisiert, daß
a) ohne ein Kältemittel auf der Basis von FCKW, H-FCKW und FKW betrieben werden kann,
b) lediglich eine minimale Füllmenge an Kältemittel benötigt und
c) auf jegliche zusätzliche Sicherheitstechnik im Hinblick auf das verwendete Kältemittel verzichten kann.

Zudem ist die Umrüstung bereits in Betrieb befindlicher, steckerfertiger Kühlmöbel ohne weiteres realisierbar.

## Patentansprüche

1. Steckerfertiges Kühlmöbel zur Lagerung und/oder Präsentation von Waren mit wenigstens einem gekühlten Warenraum, **dadurch gekennzeichnet,** daß das steckerfertige Kühlmöbel einen hermetisch abgeschlossenen Kältemittelkreislauf aufweist und als Kältemittel für diesen Kältemittelkreislauf Propan oder Propen oder ein Gemisch aus Propan und Propen verwendet wird.

2. Steckerfertiges Kühlmöbel zur Lagerung und/oder Präsentation von Waren nach Anspruch 1, dadurch gekennzeichnet, daß das Kältemittel einen Propananteil von 1 bis 99 Vol.-% und/oder einen Propenanteil von 99 bis 1 Vol.-% aufweist.

3. Steckerfertiges Kühlmöbel zur Lagerung und/oder Präsentation von Waren nach Anspruch 1 oder 2, dadurch gekennzeichnet, daß die in dem hermetisch abgeschlossenen Kältemittelkreislauf zirkulierende Kältemittelmenge weniger als 200 g, insbesondere weniger als 150 g beträgt.

4. Verfahren zum Betreiben eines steckerfertigen Kühlmöbels zur Lagerung und/oder Präsentation von Waren mit wenigstens einem gekühlten Warenraum und einem hermetisch abgeschlossenen Kältemittelkreislauf, **dadurch gekennzeichnet,** daß als Kältemittel für diesen Kältemittelkreislauf Propan oder Propen oder ein Gemisch aus Propan und Propen verwendet wird.

5. Verfahren zum Betreiben eines steckerfertigen Kühlmöbels zur Lagerung und/oder Präsentation von Waren nach Anspruch 4, dadurch gekennzeichnet, daß das Kältemittel einen Propananteil von 1 bis 99 Vol.-% und/oder einen Propenanteil von 99 bis 1 Vol.-% aufweist.

6. Verfahren zum Betreiben eines steckerfertigen Kühlmöbels zur Lagerung und/oder Präsentation von Waren nach Anspruch 4 oder 5, dadurch gekennzeichnet, daß die in dem hermetisch abgeschlossenen Kältemittelkreislauf zirkulierende Kältemittelmenge weniger als 200 g, insbesondere weniger als 150 g beträgt.
